# EUROPEAN PATENT APPLICATION

(11) **EP 1 903 742 A1**
(43) Date of publication of application: **26.03.2008**
(21) Application number: 06761508.8
(22) Date of filing: 20.07.2006
(51) Int. Cl.: H04L 29/06

(54) **A METHOD, SYSTEM AND APPARATUS FOR ACCESSING THE WEB SERVER**

(30) Priority: 09.08.2005 CN 200510091825
(71) Applicant: Huawei Technologies Co., Ltd., Longgang District Shenzhen Guangdong 518129 (CN)
(72) Inventor: LI, Lei, Guangdong 518129 (CN); CHEN, Jizhou, Guangdong 518129 (CN)
(74) Representative: Körber, Martin Hans
(86) International application number: PCT/CN2006/001773
(87) International publication number: WO 2007/016850

(57) **Abstract**

A method, system and gateway for accessing a Web Server. The method includes: configuring a relation between address information of Web Servers and the identities of the Web Servers in a gateway corresponding to multiple internal Web Servers; the public network IP addresses of the multiple internal Web Servers are identical; acquiring, by a client, the identity information of an internal Web Server to be accessed, and transmitting, by the client, a packet carrying the identity to the gateway; forwarding, by the gateway, the packet to the internal Web Server corresponding to the packet according to the relation and the identity carried in the packet. By applying the present invention, a client may accurately access multiple internal Web Servers with only a private IP address; moreover, functions in the method of the present invention does not conflict with the Web Server functions provided by the gateway; therefore, the public network IP address resources are saved.

## Description

### Field of the Invention

The present invention relates to network communication technologies, and more particularly, to a method, a system and an apparatus for accessing a Web Server.

### Background of the Invention

At present, along with the increasing development of technologies, services carried by an IP network are applied widely. In some applications, there are more and more Servers applied at home along with the development of network services; and the major application is to configure a Web Server at home.

In previous technologies, when a user configures a Web Server, the Web Server needs to be taken into the equipment room of a telecommunication operator for server trusteeship, and the fee for the trusteeship is very expensive. Along with the extension of the function of an ADSL Modem and the application of a Home Gateway (HGW) device, the Web Server may be configured at home. At present, the methods for configuring a Web Server at home include the following.

In the first method, the Web Server is configured at home by using a public network IP address.

When the Web Server is configured at home, there are two important problems: one is the problem of a domain name; the other is the problem of firewall traversing and port conversion. The above two problems may be easily solved by providing the Web Server with a public network IP address.

There are many methods for providing the Web Server with the public network IP address; some of the methods are described as follows.

IP Extension: An HGW applies multiple public network IP addresses via a public network; one public network IP address is taken as the IP address of the Wide Area Network (WAN) interface of the HGW; and the other public IP addresses are used by network terminals configured at home, e.g. allocated to multiple internal client devices via a Dynamical Host Configure Protocol (DHCP) Server. Therefore, the Web Server may acquire the public network IP address by using the IP Extension.

DHCP Relay: The Web Server acquires the public network IP address via the DHCP, i.e. the HGW provides a DHCP Relay and transparently transmits the DHCP request of the Web Server. Therefore, the Web Server acquires the public network IP address.

IP Clone: The public network IP address of the HGW is given to a designated internal Web Server by the HGW; and the HGW does not perform Net Address Translation (NAT) for all packets sent by the designated Web Server; and all data or partial data sent to the public network IP address may be simultaneously sent to the HGW and the designated internal Web Server.

In the first method, because each Web Server needs to use a public network IP address, when multiple Web Servers are configured at home, multiple public network IP addresses are needed; when many users configure Web Servers at home, a great deal of valuable IP address resources are occupied, which is unacceptable for operators.

In the second method, the Web Server is configured at home by using a private network IP address. By using a Virtual Server, the Web Server may provide Web Server services via a private IP address.

The Virtual Server is capable of forwarding data designated to a certain port of the HGW to a certain port of an internal Web Server. In this way, the Web Server may provide services related to the port.

In the second method, the Virtual Server may provide Web Server services without a public network IP address; however, services related to a designated port can only be sent to a certain Web Server instead of multiple Web Servers; moreover, the services related to the designated port may conflict with Web Server functions provided by the HGW.

### Summary of the Invention

The embodiments of the present invention provide a method, a system and an apparatus for accessing a Web Server. In the embodiments of the present invention, valuable public network IP address resources are saved by configuring the identities of multiple internal Web Servers having the same public network IP addresses.

A method for accessing a Web Server includes:
a. configuring a relation between address information of Web Servers and identities of the Web Servers in a gateway corresponding to multiple internal Web Servers; the public network IP addresses of the multiple internal Web Servers are identical;
b. acquiring, by a client, the identity of an internal Web Server to be accessed, and transmitting a packet carrying the identity to the gateway;
c. forwarding, by the gateway, the packet to the internal Web Server corresponding to the packet according to the relation and the identity carried in the packet.

The identity is domain name or port information; and the public network IP address is the public network IP address of the gateway corresponding to the multiple internal Web Servers.

The identity is the domain names; and
the Step a further includes: registering, by the gateway, the relation between the public network IP addresses and the domain names of the multiple internal Web Servers in a public server automatically; and
the Step b includes:
   acquiring, by the client, the public network IP address corresponding to the Web Server to be accessed from the public server according to the domain name of the internal Web Server to be accessed, and transmitting a HTTP request carrying the domain name to the gateway according to the public network IP address.

The address information of each internal Web Servers in Step a includes: the host name of the internal Web Server; or
the host name of the internal Web Server and the private IP address of the internal Web Server; or
the private IP address of the internal Web Server and the service port number of the internal Web Server; or
the host name of the internal Web Server, the private IP address of the internal Web Server and the service port number of the internal Web Server; or
the private IP address of the internal Web Server; or
the private IP address of the internal Web Server and the service port number of internal Web Server.

The relation between the address information and the domain names of the multiple internal Web Servers in Step b is configured as a Virtual Server table; and
the information in the Virtual Server table further includes:
   the address of the public server;
   the address of the public server, a user name of the public server and a password of the public server;
   a WAN interface and the address of the public server; or
   a WAN interface, the address of the public server, a user name of the public server and a password of the public server.

The Virtual Server table is configured in a manner of WEB/TR069/SNMP/command line.

The Virtual Server table configured in the manner of TR069 includes: an IP-connection-based Virtual Server table or a PPP-connection-based Virtual Server table.

The Step c further includes:
establishing, by the gateway, a connection tracing corresponding to the HTTP request, and transmitting subsequent data packets of the HTTP request to the internal Web Server corresponding to the HTTP request according to the connection tracing.

The method further includes:
establishing, by the gateway, an anticipative tracing according to the HTTP request, performing a network address conversion and a port conversion for a data packet sent from the internal Web Server to the client according to the anticipative tracing, and transmitting the data packet to the client corresponding to the data packet according to a WAN interface of the gateway.

The identity is the port information; and the Step a further includes:
registering, by the gateway, a relation between public network IP addresses of the multiple internal Web Servers, the port information of the multiple internal Web Servers and the domain names of the multiple internal Web Servers in a public server automatically;
the Step b includes:
   acquiring, by the client, the public network IP address of the Web Server to be accessed and port information of the Web Server to be accessed from the public server according to the domain name of the Web Server to be accessed, and transmitting a packet carrying the port information to the gateway according to the public network IP address.

The identity is the port information; and the Step a further includes:
registering, by the gateway, a relation between the public network IP addresses of the multiple internal Web Servers and the domain names of the multiple internal Web Servers in a public server automatically; or
registering, by the gateway, a relation between the public IP address of the gateway and the domain name of the gateway in a public server automatically;
the Step b includes:
   determining, by the client, the port information corresponding to the internal Web Server to be accessed according to a relation between the multiple internal Web Servers and the port information stored by the client, and inputting the domain name of the internal Web Server to be accessed and the port information of the internal Web Server to be accessed in the address bar of a browser; acquiring, by the browser of client, the public network IP address corresponding to the domain name from the public server according to the domain name to be accessed, and transmitting a packet carrying the public network IP address and the port information to the gateway.

The identity is the port information; and the Step a further includes:
registering, by the gateway, a relation between the public IP address of the gateway and the domain name of the gateway in a public server automatically;
the Step b includes:
   inputting, by the client, the domain name of the gateway in the address bar of a browser; acquiring, by the browser, the public network IP address of the gateway from the public server according to the domain name of the gateway;
   accessing, by the client, the gateway according to the public network IP address of the gateway;
   transmitting, by the gateway, information of the multiple internal Web Servers and the port information of the multiple internal Web Servers to the client;
   determining, by the client, the port information of the internal Web Server to be accessed according to the received information of the multiple internal Web Servers and the port information of the multiple internal Web Servers, and transmitting a packet carrying the port information of the internal Web Server to be accessed to the gateway.

The address information of each Web Server in Step a is the private network IP address of each internal Web Server.

The public server includes: a DNS Server, a DDNS Server or an Enhanced DNS server.

A system for accessing a Web Server includes: a gateway, internal Web Servers and a client, wherein
the client is configured to acquire identity of an internal Web Server to be accessed, and transmit a packet carrying the identity to the gateway;
the gateway includes a storing module and a transmitting module;
the storing module of the gateway is configured to store a relation between address information and identities of internal Web Servers;
the transmitting module of the gateway is configured to transmit the packet to the internal Web Server according to the identity carried in the packet from the client and the relation stored by the storing module, and transmit the packet transmitted by the internal Web Server to the client.

The system further includes: a public server; wherein
a relation between public network IP addresses and the identities of internal Web Servers is configured in the public server; or
a relation between the public network IP address of the gateway and the domain name of the gateway is configure in the public server;
the client acquires the public network IP address of the internal Web Server to be accessed from the public server; or
the client acquires the public network IP address and the identity of the internal Web Server to be accessed from the public server; or
the client acquires the public network IP address of the gateway from the public server.

A gateway includes: a storing module and a transmitting module; wherein
the storing module is configured to store a relation between address information and identities of internal Web Servers;
the transmitting module is configured to transmit a packet to a internal Web Server corresponding to the packet according to the identity carried in the packet transmitted by a client and the relation stored by the storing module, and transmit a packet transmitted by the internal Web Server to the client.

As can be seen from the above technical solution, in the embodiments of the present invention, a relation between the identities of internal Web Servers and the address information of the internal Web Servers is configured in a gateway, and the public network IP addresses of the internal Web Servers are identical. Therefore, when a client transmits to the gateway a packet including the identity of an internal Web Server, the gateway can accurately determine the internal Web Server; so the client may accurately access each internal Web Servers having only a private network IP address. Moreover, in the method of one embodiment of the present invention, functions provided by the embodiment of the present invention may not conflict with Web Server functions provided by the gateway such as a Home Gateway. The identities of one embodiment of the present invention may be domain names or port information such as port numbers, and the embodiment of the present invention provides various methods for accessing the multiple internal Web Servers. Therefore, public network IP address resources are saved by using the technical solution provided by the embodiment of the present invention.

### Brief Description of the Drawings

Figure 1 is a schematic diagram illustrating the principle of accessing Web Servers in accordance with one embodiment of the present invention.
Figure 2 is a flowchart illustrating a method for accessing Web Servers by a gateway in accordance with one embodiment of the present invention.

### Detailed Description of the Invention

In one embodiment of the present invention, a relation between the address information of multiple internal Web Servers and the identities of the multiple internal Web Servers is configured in a gateway corresponding to the multiple internal Web Servers, and the public network IP addresses of the multiple internal Web Servers are identical; a client acquires the identity of an internal Web Server to be accessed and transmits a packet carrying the identity to the gateway; the gateway transmits the packet to the internal Web Server corresponding to the packet according to the relation and the identity carried by the packet.

The technical solutions provided by the embodiments of the present invention are further described as follows.

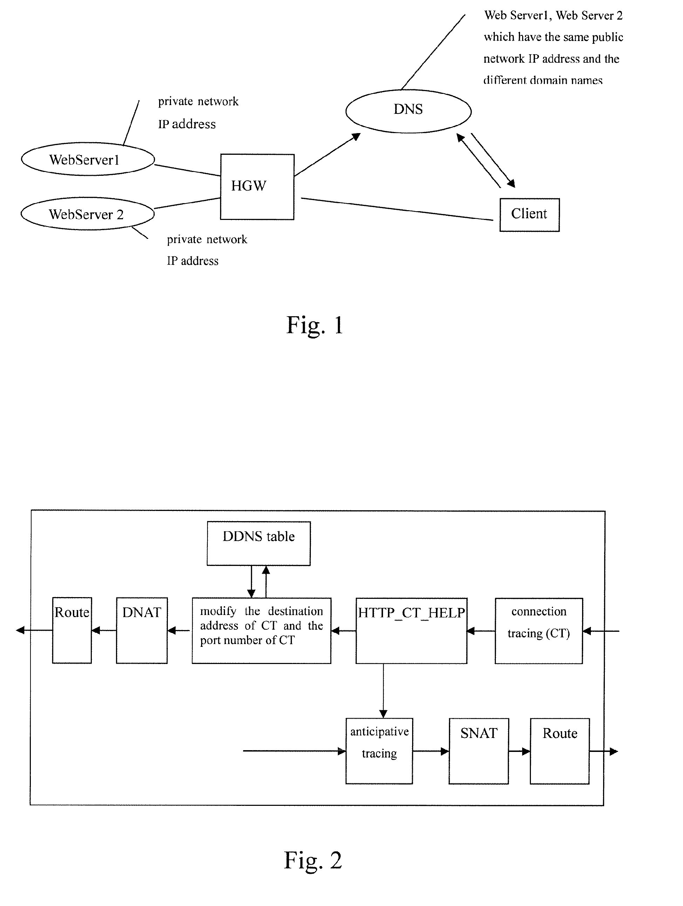

When the identities are domain names, the principle of the method for accessing Web Servers by a client in accordance with one embodiment of the present invention is shown in Figure 1.

In Figure 1, the HGW is a device connecting an internal network to a public network. In addition, HGWs and gateways described in the embodiment of the present invention are devices connecting a network to a public network. The network distribution is shown in Figure 1.

The HGW in Figure 1 has only one uplink egress, that is, all internal Web Servers correspond to one public network IP address, and the public network IP address is the public network IP address of the HGW. Each internal Web Servers registers a domain name and a public network IP address in a public server such as a Dynamic Domain Name Server (DDNS), and the public network IP address is the public network IP address of the HGW. Therefore, the public network IP address in the DDNS corresponds to multiple different domain names.

When accessing each internal Web Server, a client acquires the public network IP address of the HGW by interacting with the DDNS and accesses the HGW according to the public network IP address; the HGW parses an HTTP protocol packet received from the client and acquires the domain name to be accessed by the client. Because a relation between domain names and the address information of the multiple internal Web Servers is configured in the HGW, the HGW may relay the HTTP protocol packet to an internal Web Server corresponding to the HTTP protocol packet according to the domain name to be accessed by the client.

The public server in the embodiment of the present invention may also be a DNS or an enhanced DNS. Here, the DNS supports the relation between IP addresses, port numbers and the domain names.

In accordance with the above principle, the process for accessing the Web Servers based on the domain names provided by one embodiment of the present invention is as follows.

At first, the following information needs to be configured in the HGW in accordance with the embodiment of the present invention.

### 1. The information related to the public server is configured.

In the embodiment of the present invention, the relation between domain names of internal Web Servers and public network IP addresses of the internal Web Servers needs to be configured. Because the multiple internal Web Servers have the same public network IP address, the domain names of the multiple internal Web Servers correspond to the same public network IP address, and the public network IP address is the public network IP address of the HGW corresponding to the multiple internal Web Servers. A client may access the HGW via the public network IP address.

The information of the public server needs to be configured in the HGW. For example, the address information of the public server may be configured; the address information of the public server, the user information of a DDNS and password information of the DDNS may be configured; the WAN interface and the address information of the public server may be configured; the WAN interface, the address information of the public server, the user information of the DDNS and password information of the DDNS may be configured. The information of the public network IP is configured via the WAN interface.

In the embodiment of the present invention, the WAN generally refers to as the public network; and the WAN interface generally refers to as the interface of the HGW towards to the public network side, and the WAN interface occupies a public network address.

After the above configuration, the HGW automatically registers in the public server the relation between the domain names of the internal Web Servers and the public network IP addresses of the internal Web Servers according to the configured information of the public server.

### 2. A relation of packet forwarding is configured.

A relation between the domain names of the internal Web Servers and the address information of the internal Web Servers needs to be configured in the HGW. The relation may be configured as a domain-name-based Virtual Server table. The information in the domain-name-based Virtual Server table includes: the domain names of the internal Web Servers, host names of the internal Web Servers, private network IP addresses of the internal Web Servers and service port numbers of the internal Web Servers.

In the domain-name-based Virtual Server table, one of the host names of the Web Servers and the private network IP addresses of the Web Servers needs to be configured; if the private network IP addresses of the internal Web Server are allocated statically instead of allocated by the HGW, the private network IP addresses of the internal Web Server need to be inputted. If the host names are identical with the domain names or there is a relation between the host names and the domain names, the host names may not be configured in the domain-name-based Virtual Server table.

If the gateway includes more than one public network interface, the above relation may further include WAN interfaces. Here, the WAN interface is an interface for a gateway-like device to acquire a public network IP address.

In the HGW, the information related to the public server, such as the DDNS, and the domain-name-based Virtual Server table may be configured together; and the information configured together includes: the domain names of the internal Web Servers, the host names of the internal Web Servers, the private network IP addresses of the internal Web Servers, the service ports of the internal Web Servers, the WAN interfaces, a DDNS Provider, the DDNS Username and the DDNS Password.

Similarly, in the information configured together, if the domain names of the internal Web Servers are identical with the host names of the internal Web Servers, only one of the domain names and the host names needs to be configured; one of the host names of the internal Web Servers and the private network IP addresses of the internal Web Servers need to be inputted; and if the private IP addresses of the internal Web Servers are allocated by a DHCP Server in the HGW, the private network IP addresses of the Web Servers may not be configured.

The above configured information may be configured in the HGW by using a command line/WEB/TR069/SNMP/CLI.

TR069 is a standard of DSL forum, i.e. a CPE WAN Management Protocol, and TR069 is a set of management and maintenance mechanism in the HGW.

When the information configured together is configured in the TR069 manner, items and parameters configured in the TR069 manner are shown in Tables 1 and 2.

**Table 1**

| InternetGatewayDevice.WANDevice.{i}.WANCo nnectionDevice. {i}.WANIPConnection.{i}.DDNSConf iguration. {i} | | | |
|---|---|---|---|
| DDNSCfgEnabled | Bool | R | R |
| DDNSProvider | string | R | R |
| DDNSUsername | string | R | R |
| DDNSPassword | string | R | R |
| LocalServerHostName | string | R | R |
| LocalServerDomain | string | R | R |
| **LocalServerIP** | string | R | R |
| **ServicePort** | string | R | R |

**Table 2**

| InternetGatewayDevice.WANDevice.{i}.WANCo nnectionDevice. {i}.WANPPPConnection.{i}.DDNSCo nfiguration. {i} | | | |
|---|---|---|---|
| DDNSCfgEnabled | Bool | R | R |
| DDNSProvider | string | R | R |
| DDNSUsername | string | R | R |
| DDNSPassword | string | R | R |
| LocalServerHostName | string | R | R |
| LocalServerDomain | string | R | R |
| **LocalServerIP** | string | R | R |
| ServicePort | string | R | R |

Table 1 is an IP-connection-based Virtual Server table, and Table 2 is a PPP-connection-based Virtual Server table.

In the embodiment of the present invention, the HGW may provide a DHCP Server function and allocate the private network IP address to each internal Web Servers. The HGW may further provide a DDNS function, so that each internal Web Server may register the domain name and the public IP address in a DDNS of the public network.

After the above configuration, when accessing Web Server1, Web Server2 or other internal Web Servers, a Client of an external network first performs a DNS to acquire the public network IP address of an internal Web Server to be accessed; because the Web Servers reuse the public network IP address of the HGW, the public network IP addresses of the Web Servers acquired by the Client are identical.

After acquiring the public network IP address of the Web Server, the Client performs HTTP protocol processing and sends an HTTP request to the Web Server; in fact, the HTTP request sent by the Client is transmitted to the HGW.

After the HGW receives the HTTP request sent by the client, the processing procedure of the HGW is shown in Figure 2.

In Figure 2, the HGW parses the received HTTP request and implements the dynamic Destination Network Address and port Translation (DNAT) according to a domain name carried by the HTTP request. Specifically the following processes are included.

After acquiring the domain name carried by the HTTP request, the HGW inquires the domain-name-based Virtual Server table and acquires the host name of the Web Server or the private network IP address of the Web Server; if the HGW acquires the host name of the Web Server, the HGW inquires a table of the host name and the IP address recorded by the DHCP, and acquires the private network IP address of the Web Server.

After determining the private network IP address of the Web Server corresponding to the HTTP request, the HGW performs the DNAT, modifies the destination address of the HTTP request into the private network IP address acquired by inquiring the table and modifies the port number of the HTTP request into the service port number of the Web Server acquired by inquiring the table.

When the first HTTP request packet comes, the HGW may establish a connection tracing table according to five tuples; the process for creating the connection tracing table is as follows.
1. When the HTTP request is transmitted from the client of the external network, the HGW first establishes a Connection Tracing (CT) according to the five tuples of HTTP request packet. The five tuples include a source IP address, a destination IP address, a source port number, a destination port number and a protocol number.
2. A data matching condition is created, and the data according with the data matching condition is the data whose destination port number is 80; when the data accords with the data matching condition, i.e. the destination port number of the data is 80, the following processes are performed.
   1) The HTTP request protocol packet is parsed and the domain name is extracted.
   2) The DDNS table is inquired according to the domain name, and the host name of the internal Web Server or the domain name of the internal Web Server is acquired; an address allocation table of the DHCP is inquired according to the host name, and the private network IP address corresponding to the host name is acquired; or the private network IP address of the Web Server is directly acquired from a DDNS table configured by an operator; and the service port number may be also acquired from the DDNS table.
   3) The destination address of the CT and the port number of the CT are modified according to the private network IP address of the Web Server and the port number of the Web Server.
   4) One of the item of the connection tracing table is created.
3. The DNAT is performed, and the destination address and port number of the data are modified.
4. A Route is performed, and the interface corresponding to the packet is found, and the data is sent to the Web Server corresponding to the packet.
5. The data sent by the internal Web Server is matched with the anticipative tracing, and the SNAT and the Route are performed, the data is sent to the client of the external network.
6. The client may send subsequent TCP packets after sending the HTTP request, and the subsequent TCP packet may be matched with the CT according to the five tuples, so that the above processes may correspondingly be performed; the DNAT may be performed according to the destination address and port number of the CT, so that the data is transmitted to the Web Server corresponding to the data accurately.

In this way, though the multiple Web Servers correspond to the same public network IP address which is the legal address of unique WAN interface of the HGW, the HGW can determines the destination Web Server of the packet sent by the client, and the destination Web Server may be one of the internal Web Servers or the Web Server in the HGW; moreover, the DNAT can be implemented according to the above identity in accordance with the embodiment of the present invention; therefore, the multiple internal Web Server may be accessed via the same public network IP address.

One embodiment of the present invention further provides the other two methods for accessing internal Web Servers.

In the first method, the Web Servers are accessed according to the port numbers.

The information related to the public server needs to be configured in the gateway. For example, the information may include a relation between public network IP addresses, port numbers and domain names of the internal Web Servers.

When the internal Web Servers automatically register the DDNS via the gateway, the domain names, the public network IP addresses and the port numbers are registered at the same time; the multiple internal Web Servers have the same public network IP addresses and different domain names.

When the client of the external network performs the DNS to parse the Web Server, not only the public network IP address of the Web Server needs to be acquired, but also the port number of the Web Server needs to be acquired. And the client accesses the internal Web Server according to the acquired public network IP address and the port number.

After receiving the packet sent by the client of the external network, the HGW, according to port number carried by the packet, sends the packet to the internal Web Server according to the port number.

In the method, protocols need to be extended to ensure that the DDNS and the DNS are able to submit and acquire the port number.

In the second method, the Web Servers are accessed according to the port numbers.

The information related to the public server needs to be configured in the gateway. For example, the information may include a relation between public network IP addresses of the internal Web Servers and domain names of the internal Web Servers or relation between the public network IP addresses of the gateway and the domain names of the gateway. The public network IP addresses of the internal Web Server are identical and the domain names of the internal Web Servers are different.

The gateway automatically registers the above configured relations in the public server.

When the relation between the public network IP addresses of the gateway and the domain names of the gateway is configured in the DNS, a client of the external network may inquire about and acquire port numbers of the Web Servers connecting to the LAN port from the HGW by accessing the HGW according to the domain name of the HGW; the port numbers may be shown on the Web page of the HGW or the network management page of the HGW. Therefore, the client may acquire the port number of each Web Server, and the client may carry the port number of a Web Server when accessing the Web Server. Because the relation between the port numbers and the address information of the Web Servers is configured in the HGW, the HGW may relay the packet sent by the client to the internal Web Server corresponding to the packet.

For example, when the domain name of the HGW is www.lileihgw.com, the client may access the HGW via www.lileihgw.com, access Web Server1 connecting to the LAN port via www.lileihgw.com:8010, and access Web Server2 connecting to the LAN port via www.lileihgw.com:8020.

The client may also acquire the port number of the Web Server to be accessed in other manners, e.g. the client may determine the port number of the Web Servers in advance, such as determining the port number used by Web Server1 is 8010 and the port number used by Web Server2 is 8020; in this way, the client may carry the determined port number when accessing the Web Server; and the HGW may send the packet sent by the client to the internal Web Server.

The system provided by one embodiment of the present invention for accessing Web Servers includes: a gateway, a public server such as a DDNS, multiple internal Web Servers and a client.

The gateway mainly includes a storing module and a transmitting module.

A relation between public network IP addresses of internal Web Servers and the identities of the internal Web Servers is defined in the public server such as DDNS; the identities may be domain names or port numbers; the public network IP addresses of the internal Web Servers are identical. The relation stored in the public server is as described in the above method.

When the identities are the domain names, the client acquires the public network IP address of the Web Server to be accessed from the DDNS; when the identities are the port numbers, the client acquires the public network IP address of the Web Server to be accessed and the port number of the Web Server to be accessed from the DDNS, or acquires the public network IP address of the gateway from the DDNS. The information acquired from the DDNS by the client is as described in the above method.

The client acquires the identity of the internal Web Server, and transmits a packet carrying the identity of the internal Web Server to the gateway; the storing module of the gateway stores the relation between the address information and the identities of the internal Web Servers. The process for acquiring the identity of the internal Web Server by the client is as described in the above method; the relation between the address information and the identities of the internal Web Servers stored by the storing module is as described in the above method.

The transmitting module of the gateway transmits the packet to the internal Web Server corresponding to the packet according to the identity carried by the packet from the client and according to the relation stored by the storing module. When the identities of the internal Web Servers are the domain names, after receiving an HTTP request sent by the client, the transmitting module needs to establish a connection tracing and anticipative tracing, and the transmitting module transmits the subsequent packets of the HTTP request according to the connection tracing, and transmits packets to be transmitted to the client by the internal Web Server according to the anticipative tracing; the process for transmitting the packet is as described in the above method.

Though the present invention is described through the above embodiments, those skilled in the art may make numerous changes and variations on the method of the present invention without departing from scope of the present invention, therefore any change or variation within the technical scope disclosed by the present invention should be covered by the protection scope of the present invention.

## Claims

1. A method for accessing a Web Server, comprising:
a. configuring a relation between address information of Web Servers and identities of the Web Servers in a gateway corresponding to multiple internal Web Servers; the public network IP addresses of the multiple internal Web Servers are identical;
b. acquiring, by a client, the identity of an internal Web Server to be accessed, and transmitting a packet carrying the identity to the gateway;
c. forwarding, by the gateway, the packet to the internal Web Server corresponding to the packet according to the relation and the identity carried in the packet.

2. The method of Claim 1, wherein the identity comprises: domain name or port information; and the public network IP address is the public network IP address of the gateway corresponding to the multiple internal Web Servers.

3. The method of Claim 2, wherein the identity is the domain names; and
the Step a further comprises:
registering, by the gateway, the relation between the public network IP addresses and the domain names of the multiple internal Web Servers in a public server automatically; and
the Step b comprises:
acquiring, by the client, the public network IP address corresponding to the Web Server to be accessed from the public server according to the domain name of the internal Web Server to be accessed, and transmitting a HTTP request carrying the domain name to the gateway according to the public network IP address.

4. The method of Claim 3, wherein the address information of each internal Web Servers in Step a comprises: the host name of the internal Web Server; or
the host name of the internal Web Server and the private IP address of the internal Web Server; or
the private IP address of the internal Web Server and the service port number of the internal Web Server; or
the host name of the internal Web Server, the private IP address of the internal Web Server and the service port number of the internal Web Server; or
the private IP address of the internal Web Server; or
the private IP address of the internal Web Server and the service port number of internal Web Server.

5. The method of Claim 4, wherein the relation between the address information and the domain names of the multiple internal Web Servers in Step b is configured as a Virtual Server table; and
the information in the Virtual Server table further comprises:
the address of the public server;
the address of the public server, a user name of the public server and a password of the public server;
a WAN interface and the address of the public server; or
a WAN interface, the address of the public server, a user name of the public server and a password of the public server.

6. The method of Claim 5, wherein the Virtual Server table is configured in a manner of WEB/TR069/SNMP/command line.

7. The method of Claim 6, wherein the Virtual Server table configured in the manner of TR069 comprises: an IP-connection-based Virtual Server table or a PPP-connection-based Virtual Server table.

8. The method of Claim 3, wherein the Step c further comprises:
establishing, by the gateway, a connection tracing corresponding to the HTTP request, and transmitting subsequent data packets of the HTTP request to the internal Web Server corresponding to the HTTP request according to the connection tracing.

9. The method of Claim 3, further comprising:
establishing, by the gateway, an anticipative tracing according to the HTTP request, performing a network address conversion and a port conversion for a data packet sent from the internal Web Server to the client according to the anticipative tracing, and transmitting the data packet to the client corresponding to the data packet according to a WAN interface of the gateway.

10. The method of Claim 2, wherein the identity is the port information; and
the Step a further comprises:
registering, by the gateway, a relation between public network IP addresses of the multiple internal Web Servers, the port information of the multiple internal Web Servers and the domain names of the multiple internal Web Servers in a public server automatically;
the Step b comprises:
acquiring, by the client, the public network IP address of the Web Server to be accessed and port information of the Web Server to be accessed from the public server according to the domain name of the Web Server to be accessed, and transmitting a packet carrying the port information to the gateway according to the public network IP address.

11. The method of Claim 2, wherein the identity is the port information; and
the Step a further comprises:
registering, by the gateway, a relation between the public network IP addresses of the multiple internal Web Servers and the domain names of the multiple internal Web Servers in a public server automatically; or
registering, by the gateway, a relation between the public IP address of the gateway and the domain name of the gateway in a public server automatically;
the Step b comprises:
determining, by the client, the port information corresponding to the internal Web Server to be accessed according to a relation between the multiple internal Web Servers and the port information stored by the client, and inputting the domain name of the internal Web Server to be accessed and the port information of the internal Web Server to be accessed in the address bar of a browser; acquiring, by the browser of client, the public network IP address corresponding to the domain name from the public server according to the domain name to be accessed, and transmitting a packet carrying the public network IP address and the port information to the gateway.

12. The method of Claim 2, wherein the identity is the port information; and
the Step a further comprises:
registering, by the gateway, a relation between the public IP address of the gateway and the domain name of the gateway in a public server automatically;
the Step b comprises:
inputting, by the client, the domain name of the gateway in the address bar of a browser; acquiring, by the browser, the public network IP address of the gateway from the public server according to the domain name of the gateway;
accessing, by the client, the gateway according to the public network IP address of the gateway;
transmitting, by the gateway, information of the multiple internal Web Servers and the port information of the multiple internal Web Servers to the client;
determining, by the client, the port information of the internal Web Server to be accessed according to the received information of the multiple internal Web Servers and the port information of the multiple internal Web Servers, and transmitting a packet carrying the port information of the internal Web Server to be accessed to the gateway.

13. The method of Claims 10, 11 or 12, wherein the address information of each Web Server in Step a comprises: the private network IP address of each internal Web Server.

14. The method of any of Claims 3 to 12, wherein the public server comprises: a DNS Server, a DDNS Server or an Enhanced DNS server.

15. A system for accessing a Web Server, comprising: a gateway, internal Web Servers and a client, wherein
the client is configured to acquire identity of an internal Web Server to be accessed, and transmit a packet carrying the identity to the gateway;
the gateway comprises a storing module and a transmitting module;
the storing module of the gateway is configured to store a relation between address information and identities of internal Web Servers;
the transmitting module of the gateway is configured to transmit the packet to the internal Web Server according to the identity carried in the packet from the client and the relation stored by the storing module, and transmit the packet transmitted by the internal Web Server to the client.

16. The system of Claim 15, further comprising: a public server; wherein
a relation between public network IP addresses and the identities of internal Web Servers is configured in the public server; or
a relation between the public network IP address of the gateway and the domain name of the gateway is configure in the public server;
the client acquires the public network IP address of the internal Web Server to be accessed from the public server; or
the client acquires the public network IP address and the identity of the internal Web Server to be accessed from the public server; or
the client acquires the public network IP address of the gateway from the public server.

17. A gateway, comprising: a storing module and a transmitting module; wherein
the storing module is configured to store a relation between address information and identities of internal Web Servers;
the transmitting module is configured to transmit a packet to a internal Web Server corresponding to the packet according to the identity carried in the packet transmitted by a client and the relation stored by the storing module, and transmit a packet transmitted by the internal Web Server to the client.
